# FASCICULE DE BREVET EUROPEEN

(11) **EP 3 947 158 B1**
(45) Date de publication et mention de la délivrance du brevet: **27.04.2022**
(21) Numéro de dépôt: 21731248.7
(22) Date de dépôt: 11.05.2021
(51) Int. Cl.: B64G 1/22, B64G 1/66, B64G 4/00, F16M 11/12, H01Q 1/12, H01Q 3/08, F16M 11/18, B64G 1/10, F16M 11/04, F16M 13/02

(54) **DISPOSITIF DE DÉPLOIEMENT ET DE POINTAGE D'UN ÉQUIPEMENT PORTÉ PAR UN ENGIN SPATIAL**
VORRICHTUNG ZUM AUSLÖSEN UND ZEIGEN EINES VON EINEM RAUMFAHRZEUG GETRAGENEN GERÄTETEILS
DEVICE FOR DEPLOYING AND POINTING AN ITEM OF EQUIPMENT CARRIED BY A SPACECRAFT

(30) Priorité: 19.05.2020 FR 2004989
(43) Date de publication de la demande: 09.02.2022
(73) Titulaire: Airbus Defence and Space SAS, 31402 Toulouse Cedex 4 (FR)
(72) Inventeur: TAJAN, Florent, 31402 TOULOUSE Cedex 4 (FR); PUPILLE, Gilles, 31402 TOULOUSE Cedex 4 (FR)
(74) Mandataire: Plasseraud IP
(86) Numéro de dépôt international: PCT/FR2021/050813
(87) Numéro de publication internationale: WO 2021/234246

(56) Documents cités:
- EP-A1- 2 648 281
- FR-A1- 2 672 836
- US-A1- 2019 296 418

## Description

### Domaine technique

La présente demande concerne un dispositif de déploiement et de pointage d'un équipement, le dispositif étant solidaire d'un engin spatial tel qu'un satellite ou une sonde spatiale. La demande s'applique par exemple au déploiement et au pointage d'instruments optiques tels que des télescopes.

### Technique antérieure

Dans des missions spatiales, on souhaite pouvoir orienter un équipement embarqué sur un engin spatial de manière à le placer en condition de fonctionnement. Par exemple, pour des missions d'observation, on veut permettre à un instrument optique de pointer une cible depuis un engin spatial, que la cible soit sur Terre ou dans l'espace. On peut également avoir besoin d'orienter d'autres types d'équipements tels que des antennes, des réflecteurs, des propulseurs, etc. Pour cela, il est nécessaire d'utiliser un mécanisme de pointage permettant au moins deux degrés de liberté en rotation.

Notamment, il est connu de monter l'équipement sur un support orientable. Dans ce cas, il peut être avantageux que le support mobile présente un troisième degré de liberté en translation, pour permettre d'une part de ramener l'équipement dans une position se trouvant en dehors du domaine de déplacement opérationnel, afin de le gerber au lancement, mais d'autre part pour permettre plus de liberté sur les mouvements de l'équipement. Sur le plan de la cinématique, un troisième degré de liberté peut permettre de fournir à l'équipement une trajectoire lui évitant des chocs vis-à-vis d'autres composants de l'engin spatial. Sur le plan de la dynamique, un troisième degré de liberté peut permettre de déplacer le centre de rotation de l'équipement et de mieux maîtriser les problématiques d'inertie vue par les actionneurs.

Ainsi, on connaît du document EP 3 213 999 un dispositif de déploiement et de pointage d'un instrument optique tel qu'un télescope, comprenant une plate-forme mobile sur laquelle l'instrument est monté, et un ensemble d'actionneurs reliant la plate-forme mobile à un châssis du satellite, les actionneurs étant utilisés pour déployer la plate-forme depuis une position de gerbage et pour l'orienter.

Tous les actionneurs sont formés d'un mandrin relié à un élément linéaire assemblé à la plate-forme, et l'ajustement de la position de la plate-forme est réalisé en ajustant pour chaque actionneur la longueur de l'élément linéaire, en le déroulant ou en l'enroulant sur le mandrin correspondant.

Ce dispositif présente cependant plusieurs inconvénients liés à la structure des actionneurs. En premier lieu, les éléments linéaires, du fait de leur géométrie, ne peuvent pas présenter une rigidité suffisante pour permettre le déploiement et l'orientation de charges lourdes ou d'instruments massifs. De plus, même en concevant des éléments linéaires rigides, il est alors difficile de les enrouler sur des mandrins et il faut utiliser des mandrins présentant un rayon relativement élevé, ce qui augmente l'encombrement du dispositif et diminue sa précision. Le document FR2672836 divulgue un dispositif de déploiement similaire.

Il existe donc un besoin pour améliorer la situation.

### Résumé

Compte-tenu de ce qui précède, l'invention a pour but de proposer un dispositif de déploiement et de pointage d'un équipement pouvant présenter une masse plus élevée, et permettant une précision accrue par rapport à l'art antérieur.

Un autre but de l'invention est de proposer un dispositif présentant une bonne tenue aux efforts générés lors du lancement de l'engin spatial portant le dispositif et l'équipement.

A cet égard, la présente demande a pour objet un dispositif de déploiement et de pointage d'un équipement, comprenant :
- une plate-forme mobile de réception de l'équipement,
- un support solidaire d'une paroi d'un engin spatial, et
- trois actionneurs linéaires identiques reliant le support à la plate-forme mobile, les actionneurs étant adaptés pour déplacer la plate-forme mobile en translation selon un axe et pour orienter la plate-forme mobile en rotation autour de deux axes,
caractérisé en ce que chaque actionneur linéaire comprend :
- une première portion reliée à la plate-forme mobile par une liaison Cardan,
- une deuxième portion reliée au support par une liaison pivot,
- un moteur, et
- une liaison vis-écrou reliant entre elles la première et la deuxième portion,
la liaison Cardan de chaque actionneur étant adaptée pour empêcher une rotation dans l'axe de la liaison vis-écrou, de sorte que l'actionnement en rotation de la vis ou de l'écrou par le moteur entraine une translation entre la première et la deuxième portion.

Avantageusement, mais facultativement, le dispositif de déploiement et de pointage comprend en outre au moins l'une des caractéristiques suivantes.

Dans un mode de réalisation, les actionneurs linéaires sont adaptés pour déplacer la plate-forme mobile de réception de l'équipement entre une position gerbée et au moins une position opérationnelle, et le support et la plate-forme mobile sont conformés pour qu'en position gerbée, la plate-forme mobile soit en appui contre le support par trois points d'appui adjacents respectivement à chaque actionneur linéaire.

Dans un mode de réalisation, la plate-forme mobile et le support sont conformés pour établir, en position gerbée, trois liaisons de type sphère-goulotte entre la plate-forme mobile et le support, les axes des liaisons sphère-goulotte étant non parallèles entre eux.

Dans un mode de réalisation, les trois liaisons sphère-goulotte sont équi-réparties sur un cercle, les axes des goulottes s'étendant radialement par rapport au cercle.

Dans un mode de réalisation, le dispositif de déploiement et de pointage comprend en outre un dispositif de maintien au lancement adapté pour maintenir, en position gerbée, la plate-forme mobile en appui contre le support lors du lancement de l'engin spatial.

Dans un mode de réalisation, le dispositif de déploiement et de pointage est en outre dimensionné pour permettre, en position gerbée, une transmission d'efforts plus importants par les points d'appui que par les actionneurs linéaires.

Dans un mode de réalisation, chaque liaison Cardan comprend au moins une lame flexible adaptée pour limiter les efforts pouvant être transmis de la plate-forme à l'actionneur linéaire correspondant.

Dans un mode de réalisation, les actionneurs sont disposés relativement au support et à la plate-forme de réception de sorte que chacun du support et de la plate-forme sont symétriques selon une symétrie centrale.

Dans un mode de réalisation, chaque liaison vis-écrou est formée par une vis à rouleaux. La vis à rouleaux peut alors comprendre une vis, comprenant un fût et une tige filetée, un écrou fileté monté sur la tige filetée, et un fourreau s'étendant autour de la vis et de l'écrou, et logeant un lubrifiant, le fourreau comprenant :
- une première portion de fourreau reliée à l'écrou et couvrant l'extrémité libre de la tige filetée de la vis, ladite première portion de fourreau étant fermée à une extrémité située à l'extrémité libre de la tige filetée,
- une deuxième portion fixe de fourreau couvrant le fût de la vis,
- une troisième portion de fourreau montée coulissante sur la deuxième portion, et
- une quatrième portion de fourreau reliée à l'écrou, et s'étendant depuis l'écrou vers le fût de la vis de manière à recouvrir en partie la troisième portion,
dans lequel la troisième et la quatrième portions de fourreau sont conformées pour empêcher l'échappement de lubrifiant du fourreau.

Un autre objet concerne un procédé de déploiement d'un dispositif selon la description qui précède, le dispositif étant monté sur un satellite, et se trouvant initialement en position gerbée dans laquelle la plate-forme mobile est en appui contre le support,
le procédé comprenant la commande de chaque actionneur linéaire pour écarter par translation la plate-forme mobile du support, et la commande de chaque actionneur pour orienter la plate-forme selon au moins une direction prédéterminée.

Un autre objet concerne un produit programme d'ordinateur, comprenant des instructions de code pour la mise en oeuvre du procédé selon la description qui précède, lorsqu'il est mis en œuvre par un calculateur.

Le dispositif proposé permet d'atteindre les objectifs énoncés ci-avant au moyen d'actionneurs linéaires comprenant une liaison vis-écrou et deux portions reliées respectivement à une plate-forme de réception de l'instrument à pointer et à un support de l'engin spatial. La liaison vis-écrou permet d'obtenir une très bonne précision pour le positionnement et le pointage de l'équipement du fait du fort rapport de réduction que l'on peut obtenir entre la rotation du moteur et la translation de l'actionneur.

Le dispositif présente également une bonne tenue au lancement puisqu'il permet de ramener la plate-forme de réception de l'instrument à pointer dans une position gerbée, dans laquelle, pour chaque actionneur, un point d'appui supplémentaire et voisin de l'actionneur est établi entre la plate-forme et le support, permettant une transmission des efforts entre la plate-forme et le support par ce point d'appui et non par l'actionneur. Des souplesses sont également introduites dans les actionneurs pour assurer que les efforts liés au lancement passent par les points d'appui supplémentaires et non par les actionneurs.

### Brève description des dessins

D'autres caractéristiques, détails et avantages apparaîtront à la lecture de la description détaillée ci-après, et à l'analyse des dessins annexés, sur lesquels :
**Fig. 1a**

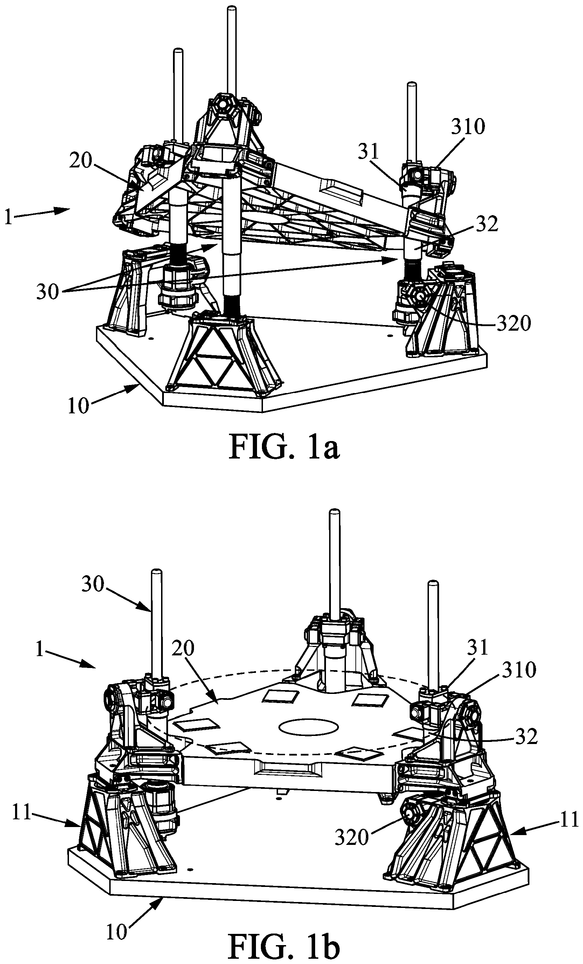

   [Fig. 1a] représente un dispositif de déploiement et de pointage selon un mode de réalisation, dans une configuration opérationnelle.
**Fig. 1b**
   [Fig. 1b] représente un dispositif de déploiement et de pointage selon un mode de réalisation, dans une configuration gerbée.
**Fig. 2**

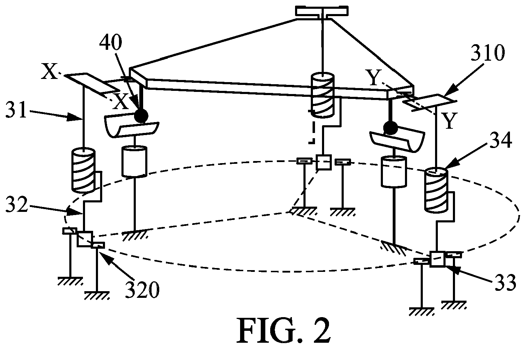

   [Fig. 2] est un schéma cinématique du dispositif de déploiement et de pointage selon un mode de réalisation.
**Fig. 3**

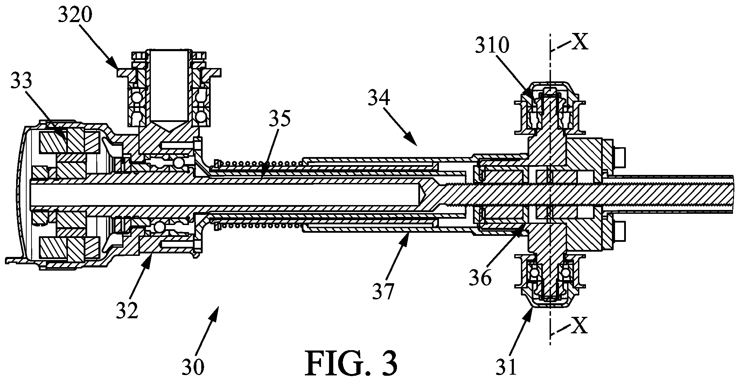

   [Fig. 3] représente un exemple de liaison vis-écrou d'un actionneur linéaire du dispositif de déploiement et de pointage.
**Fig. 4**

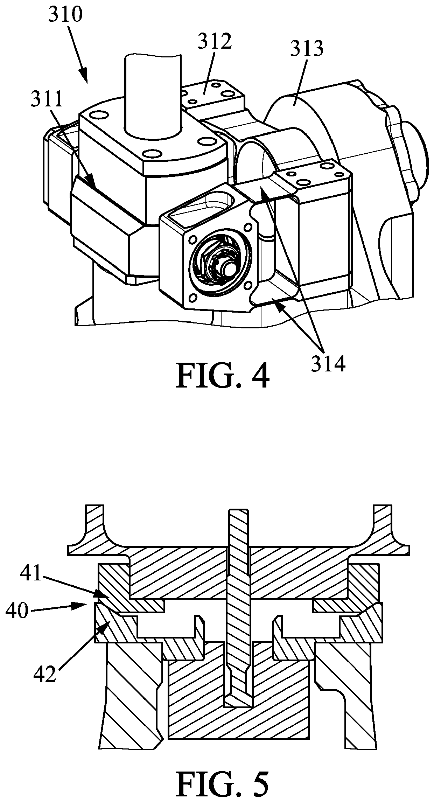

   [Fig. 4] représente un exemple de liaison Cardan utilisée dans un dispositif de déploiement et de pointage selon un mode de réalisation.
**Fig. 5**
   [Fig. 5] représente un exemple de réalisation d'une liaison sphère-V utilisée dans un dispositif de déploiement et de pointage selon un mode de réalisation.
**Fig. 6a**

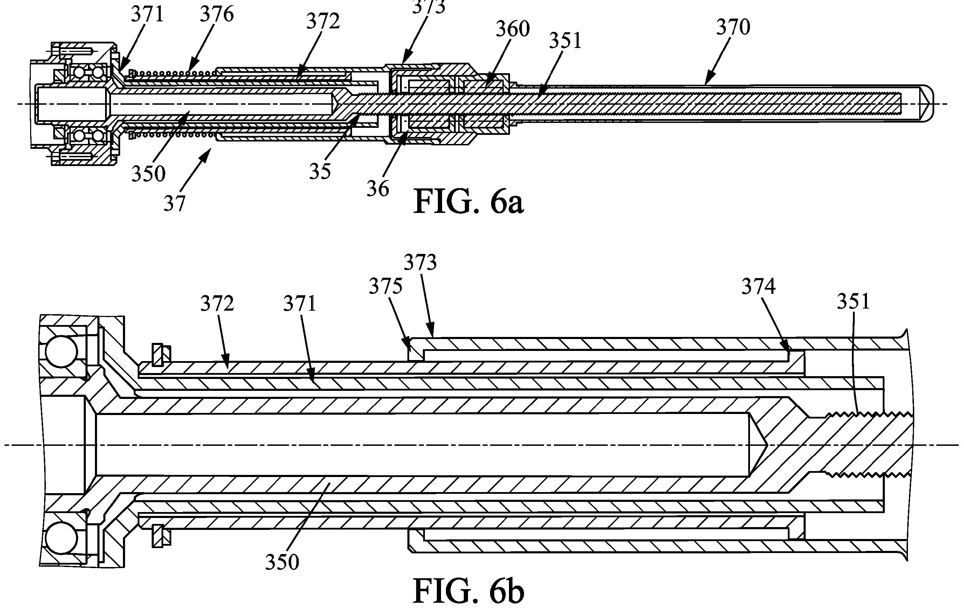

   [Fig. 6a] représente un exemple de vis à rouleau utilisé dans un dispositif de déploiement et de pointage selon un mode de réalisation.
**Fig. 6b**
   [Fig. 6b] est une vue agrandie de la vis à rouleau représentée en figure 6a.

### Description des modes de réalisation

En référence aux figures 1a et 1b, on a représenté un exemple de dispositif 1 de déploiement et de pointage d'un équipement (non représenté). L'équipement peut être un instrument optique, par exemple un télescope. Il peut également s'agir d'un pointeur laser. En variante, l'équipement peut être toute autre charge portée par un engin spatial et qu'il est avantageux de pouvoir orienter tel que par exemple une antenne, un réflecteur, un propulseur, etc.

Le dispositif 1 est adapté pour être monté de façon fixe à un engin spatial (non représenté) tel qu'un satellite. Il comprend à cet égard un support 10 solidaire d'une paroi de l'engin spatial. Dans un mode de réalisation, le support 10 du dispositif 1 peut même être intégré à une paroi de l'engin spatial, c'est-à-dire être une partie d'une paroi de l'engin spatial.

Le dispositif 1 comprend également une plate-forme 20 de réception de l'instrument, sur laquelle l'équipement est monté fixe. Cette plate-forme 20 est mobile par rapport à l'engin spatial, et par rapport au support 10, selon trois degrés de libertés, comprenant un degré de translation et deux degrés de rotation, selon des axes de rotation de préférence perpendiculaires à la direction de translation. Par exemple, la direction de translation peut être perpendiculaire au plan du support 10, et les axes de rotation peuvent être perpendiculaires entre eux.

Pour mettre en mouvement la plate-forme 20 selon ces degrés de libertés, le dispositif 1 comprend trois actionneurs 30 identiques, reliant le support 10 à la plate-forme 20. Le fait que les actionneurs soient identiques rend la conception et la fabrication plus aisées donc moins coûteuse, et facilite également le contrôle de la position de la plate-forme.

Chaque actionneur 30 est linéaire, c'est-à-dire qu'il est adapté pour générer un mouvement de translation.

Plus précisément, et en référence aux figures 1a à 3, chaque actionneur 30 comprend :
- une première portion 31 reliée à la plate-forme 20 par une liaison 310 Cardan, c'est-à-dire une liaison selon deux axes de rotation sensiblement perpendiculaires entre eux.
- une deuxième portion 32 reliée au support 10 par une liaison pivot 320,
- un moteur 33, et
- une liaison de type vis-écrou 34, reliant entre elles la première portion 31 et la deuxième portion 32.

La liaison vis-écrou 34 comprend une vis filetée 35 et un écrou fileté 36 monté sur la vis. La première portion 31 de chaque actionneur est solidaire de l'écrou fileté 36, et la deuxième portion 32 est solidaire de la vis 35.

De plus, la liaison Cardan 310 est adaptée pour interdire une rotation de la première portion 31 dans l'axe de l'actionneur linéaire 30, c'est-à-dire dans l'axe de la liaison vis-écrou. Chaque liaison Cardan 310 comprend une première pièce 311 solidaire de l'écrou, une pièce intermédiaire 312 montée à rotation par rapport à la première pièce autour d'un premier axe respectif dont un exemple et noté X-X sur les figures 2 et 3, et une troisième pièce 313 solidaire de la plate-forme, et montée à rotation par rapport à la pièce intermédiaire autour d'un deuxième axe respectif, perpendiculaire au premier, et dont un exemple est noté Y-Y sur la figure 2. Dans un exemple de réalisation, les axes de rotation de la liaison Cardan sont avantageusement perpendiculaires à l'axe de la liaison vis-écrou. Le blocage de cette rotation permet d'empêcher une rotation de l'écrou par rapport à la vis. Ainsi, le moteur 33 entrainant en rotation la vis, provoque, par ce blocage en rotation de l'écrou, la translation de la deuxième portion 32 par rapport à la première 31.

Il est donc possible de commander la plate-forme en translation, par une translation identique et simultanée des trois actionneurs 30, ou d'orienter la plate-forme, en commandant individuellement chaque actionneur pour obtenir l'orientation voulue, comme sur la position représentée sur la figure 1a. Cette orientation variable de la plate-forme 20 est rendue possible par les liaisons rCardan du côté de la plate-forme et les liaisons pivot du côté du support. Dans des modes de réalisation, la liaison vis-écrou peut être formée par une vis à billes ou par une vis à rouleaux. Le fait d'utiliser ce type de structure de liaisons vis-écrous permet de ne réaliser que des transmissions de mouvement par rotation et non par translation dans le dispositif. En effet, dans l'espace, les liaisons glissières sont déconseillées car elles présentent des difficultés de maîtrise des frottements et des jeux, ainsi que des difficultés de confinement de lubrifiant, qui limitent la durée de vie des mécanismes et réduisent les performances en termes de précision ou de stabilité.

Dans un mode de réalisation avantageux, les liaisons vis-écrou des trois actionneurs linéaires sont formées par des vis à rouleaux, qui permettent d'obtenir un pas plus fin que des vis à billes, et donc un contrôle plus précis.

Dans ce cas, en référence aux figures 6a et 6b, la vis à rouleaux comprend la vis 35, comprenant un fût 350 et une tige filetée 351, un écrou fileté 36 monté sur la tige filetée, l'écrou fileté 36 comprenant une pluralité de rouleaux 360 répartis autour de la vis. La vis à rouleaux est lubrifiée, typiquement avec une graisse ou une huile. Or, puisque le dispositif 1 est amené à être utilisé dans l'espace, il faut éviter la vaporisation du lubrifiant, pour que la lubrification soit maintenue pendant toute la durée de vie du dispositif, et pour éviter aussi d'éventuelles contaminations d'autres dispositifs ou instruments situés au voisinage de celui-ci. Pour ce faire, la vis à rouleaux comprend un fourreau 37 s'étendant autour de la vis 35 et de l'écrou 36, et qui comprend plusieurs portions agencées les unes par rapport aux autres pour limiter l'échappement de molécules vaporisées de lubrifiant tout en autorisant le déplacement relatif de la deuxième portion de l'actionneur par rapport à la première.

Ainsi, dans un mode de réalisation, le fourreau 37 comprend :
- une première portion 370, reliée à l'écrou et couvrant l'extrémité libre de la tige filetée 351 de la vis, cette première portion étant fermée à une extrémité située du côté de l'extrémité libre de la tige filetée,
- une deuxième portion 371 fixe, couvrant le fût 350 de la vis,
- une troisième portion 372 montée coulissante sur la deuxième portion, et
- une quatrième portion 373 reliée à l'écrou, en s'étendant depuis l'écrou vers le fût de la vis de manière à recouvrir en partie la troisième portion, et
la troisième et la quatrième portions du fourreaux sont conformées pour retenir le lubrifiant dans le fourreau, et particulièrement entre la quatrième portion 373 du fourreau et la tige filetée de la vis. En particulier, les troisième et quatrième portions du fourreau forment une chicane limitant l'échappement de lubrifiant. Pour ce faire, la troisième portion 372 du fourreau comporte, à son extrémité la plus proche de l'écrou, un rebord périphérique 374 s'étendant radialement vers l'extérieur. La quatrième portion 373 du fourreau est dimensionnée de manière à avoir un diamètre interne correspondant au diamètre externe de l'extrémité de la troisième portion au niveau de son rebord périphérique, et elle comporte à son extrémité la plus proche du fût de la vis, un rebord périphérique 375 s'étendant radialement vers l'intérieur, de sorte que le diamètre interne de cette portion au niveau du rebord périphérique corresponde au diamètre externe de la troisième portion, ce diamètre externe étant considéré en dehors du rebord périphérique 374 de diamètre plus important. Les deux rebords 374, 375 forment ainsi des obstacles à l'échappement du lubrifiant, en plus de former une butée de déplacement permettant de maintenir un recouvrement entre la troisième et la quatrième portion. De plus, le fourreau peut comporter un ressort 376 s'étendant entre la troisième et la quatrième portions, et en particulier entre les extrémités de ces portions situées chacune du côté du fût de la vis, le ressort permettant d'exercer un effort tendant à éloigner ces deux portions l'une de l'autre. Ceci permet à la fois de contraindre la troisième portion 373 à rester superposée à la première 371, permet également de rapprocher les rebords périphériques des troisième et quatrième portions pour réduire la longueur de la chicane formée par ces rebords et donc limiter encore les risques d'échappement de lubrifiant.

De retour aux figures 1a, 1b et 2, dans un mode de réalisation, les actionneurs sont disposés, relativement au support 10 et à la plate-forme 20, de sorte que le support 10 et la plate-forme 20 soient chacun symétriques selon une symétrie centrale, afin de faciliter la commande des actionneurs.

Par exemple, du côté du support 10, les actionneurs sont disposés de sorte que leurs bases, c'est-à-dire l'extrémité de la deuxième portion 32 située au niveau de la liaison pivot 320, soient équi-réparties sur un cercle passant par l'axe de chaque actionneur, l'axe de la liaison pivot 320 de chaque actionneur étant de préférence tangent au cercle.

Du côté de la plate-forme 20, les pièces 313 de chaque liaison Cardan 310 liée à la plate-forme sont de préférence équi-réparties sur un cercle, les axes de rotation de chaque pièce 313 par rapport à la pièce intermédiaire 312 de la liaison Cardan étant radiales par rapport au cercle.

Les actionneurs 30 sont donc adaptés pour déplacer la plate-forme 20 relativement au support. En particulier, les actionneurs 30 sont agencés pour déplacer la plate-forme 20 depuis et vers une position gerbée, représentée sur la figure 1b, dans laquelle la plate-forme 20 est en appui contre le support 10. A cet égard, le support est conformé pour permettre l'appui de la plate-forme contre celui-ci quand la plate-forme est en position gerbée. Il peut notamment comprendre, comme représenté dans l'exemple de la figure 1, des pieds d'appui 11 saillants par rapport à la paroi de l'engin spatial sur laquelle le dispositif 1 est monté. Dans un mode de réalisation, le support 10 est conformé pour présenter trois points d'appui, formés typiquement par trois pieds d'appui saillants 11, les trois points d'appui étant adjacents respectivement à chaque actionneur linéaire 30. Les points d'appui du support sont dimensionnés pour supporter le poids de la plate-forme et de l'équipement monté sur elle.

De plus le support 10 et la plate-forme 20 sont conformés pour pouvoir bloquer les trois degrés de liberté de la plate-forme en position gerbée. Selon un mode de réalisation, le support 10 et la plate-forme 20 sont conformés pour établir, en position gerbée, trois liaisons de type sphère-goulotte ou sphère-V 40, représentées sur la figure 5. Une liaison de type sphère-goulotte 40 est une liaison obtenue par le contact d'une sphère ou un élément présentant un contour localement sphérique 41, formé par exemple par une surface de la plate-forme 20 ou un élément rapporté sur celle-ci, sur une goulotte 42, formée par exemple dans un pied 11 du support, et qui forme deux contacts ponctuels. Une liaison sphère-goulotte autorise une translation selon un axe de la goulotte, et une rotation selon trois axes, elle bloque ainsi une translation selon deux axes perpendiculaires à ceux de la goulotte. Les axes des liaisons sphère-goulotte sont donc non parallèles. Par exemple, les trois liaisons sphère-goulotte étant réparties régulièrement selon un cercle, par exemple un cercle passant par les centres des sphères 41, les axes des liaisons peuvent être radiaux par rapport à ce cercle. Cette triple liaison forme une liaison encastrement permettant d'immobiliser la plate-forme par rapport au support. Le fait de recours à trois liaisons de type sphère-goulotte permet de parvenir à ce résultat en utilisant des liaisons mécaniques identiques, ce qui rend le dispositif industriellement plus simple et moins coûteux à fabriquer.

Le dispositif de déploiement et de pointage comporte avantageusement un dispositif de maintien au lancement adapté pour appliquer une pré-charge sur la plate-forme 20 vers le support 10, lorsque la plate-forme est en position gerbée au lancement, pour maintenir la plate-forme plaquée contre le support malgré les efforts et les vibrations induits par le lancement. Par exemple, selon une conception connue de l'Homme du Métier, le dispositif de maintien au lancement peut comprendre un ou plusieurs fils fusibles maintenant initialement la plate-forme en appui contre le support, le fil étant brûlé une fois le dispositif en orbite, pour libérer la plate-forme.

Par ailleurs, la liaison encastrement formée entre la plate-forme et le support vient créer des degrés d'hyperstatisme au niveau du dispositif global. Pour limiter au maximum les contraintes induites par cet hyperstatisme, les points d'appui entre le support et la plate-forme sont positionnés le plus près possible des actionneurs linéaires.

De plus, l'ensemble du dispositif est dimensionné pour permettre qu'en position gerbée, les efforts, et notamment les efforts induits lors du lancement, transitent par les points d'appui plutôt que par les actionneurs linéaires 30, ou en d'autres termes, que les efforts transitant par les points d'appui lors du lancement soient plus importants que ceux transitant par les actionneurs. A cet égard, les points d'appui sont dimensionnés pour pouvoir tenir ces efforts. Par ailleurs, les actionneurs linéaires sont adaptés pour réduire les efforts qu'ils peuvent transmettre, en y insérant des éléments souples. En référence à la figure 4, chaque liaison 310 de type Cardan entre un actionneur linéaire et la plate-forme peut comprendre des lames flexibles 314 destinées à réduire les efforts transmissibles au niveau de cette liaison, et en particulier des efforts dans l'axe de l'actionneur. De plus, la vis filetée 35 de la liaison vis-écrou 34 de chaque actionneur 30 peut également être dimensionnée pour réduire les efforts qu'elle peut transmettre, et en particulier les efforts transversaux à l'axe de l'actionneur, en présentant un rapport longueur sur diamètre suffisamment élevé, qui doit être déterminé au cas par cas par l'Homme du Métier en fonction de la masse de l'équipement pointé, des efforts acceptables par la vis, etc. On comprend néanmoins que les souplesses induites doivent cependant être limitées pour conserver une bonne précision de positionnement de la plate-forme en orbite, cette précision ayant un impact direct sur la précision du positionnement de l'équipement monté sur la plate-forme et, dans le cas où il s'agit d'un instrument optique, sur sa netteté. L'Homme du Métier doit donc dimensionner le dispositif de manière à établir un compromis entre la souplesse des actionneurs linéaires permettant de diriger les efforts du lancement vers les points d'appui en position gerbée, et une rigidité suffisante permettant le guidage précis de la plate-forme.

Le dispositif 1 de déploiement et de pointage permet donc, grâce au mécanisme décrit ci-avant, à la fois d'orienter un équipement de façon précise et selon des procédés de commande qui peuvent être simplifiés par une symétrie du dispositif et le caractère identique des actionneurs, mais également de ramener la plate-forme et l'équipement dans une position gerbée où le maintien au lancement peut être assuré. De ce fait, la tenue aux efforts générés par le lancement est assurée sans avoir besoin de surdimensionner les actionneurs ou les articulations ou de les précharger, ce qui augmenterait la masse et le coût de l'équipement.

Dans un mode de réalisation, le dispositif est donc monté initialement en position gerbée, la plate-forme mobile étant maintenue en appui contre le support au moyen d'un dispositif de maintien au lancement. Une fois le lancement effectué, la plate-forme est libérée et les actionneurs linéaires peuvent être commandés pour d'abord écarter la plate-forme du support au moyen d'une translation, par exemple perpendiculaire au plan du support, puis pour orienter la plate-forme et donc l'équipement selon au moins une direction prédéterminée.

Le dispositif peut comprendre une carte électronique de commande intégrant un calculateur et une mémoire stockant des instructions nécessaires à la commande des actionneurs pour exécuter une série de mouvements prédéfinie. En variante, le dispositif peut comprendre une interface de communication à distance permettant de recevoir des instructions de commande émise depuis une station au sol.

Liste des références :
- 1 : dispositif de déploiement et de pointage
- 10 : support
- 11 : pieds d'appui
- 20 : plate-forme mobile
- 30 : actionneur linéaire
- 31 : première portion de l'actionneur
- 310 liaison Cardan
- 311 pièce de la liaison solidaire de l'écrou
- 312 : pièce intermédiaire de la liaison
- 313 : pièce de la liaison solidaire de la plate-forme
- 314 : lames flexibles
- 32 : deuxième portion de l'actionneur
- 320 : liaison pivot
- 33 : moteur
- 34 : liaison vis-écrou
- 35 : vis filetée
- 350 : fût
- 351 : tige filetée
- 36 : écrou fileté
- 360 : rouleaux
- 37 : fourreau
- 370 : première portion de fourreau
- 371 : deuxième portion de fourreau
- 372 : troisième portion de fourreau
- 373 : quatrième portion de fourreau
- 374 : rebord périphérique de la troisième portion
- 375 : rebord périphérique de la quatrième portion
- 376 : ressort
- 40 : liaison sphère-goulotte
- 41 : surface sphérique
- 42 : goulotte
- X-X : axe de rotation entre première et deuxième pièce d'une liaison Cardan
- Y-Y : axe de rotation entre deuxième et troisième pièce d'une liaison Cardan

## Revendications

1. Dispositif (1) de déploiement et de pointage d'un équipement, comprenant :
- une plate-forme (20) mobile de réception de l'équipement,
- un support (10) solidaire d'une paroi d'un engin spatial, et
- trois actionneurs linéaires (30) identiques reliant le support à la plate-forme mobile,
les actionneurs (30) étant adaptés pour déplacer la plate-forme mobile en translation selon un axe et pour orienter la plate-forme mobile en rotation autour de deux axes,
**caractérisé en ce que** chaque actionneur linéaire (30) comprend :
- une première portion (31) reliée à la plate-forme mobile (20) par une liaison Cardan (310),
- une deuxième portion (32) reliée au support par une liaison pivot (320),
- un moteur (33), et
- une liaison vis-écrou (34) reliant entre elles la première (31) et la deuxième portion (32),
la liaison Cardan (310) de chaque actionneur étant adaptée pour empêcher une rotation dans l'axe de la liaison vis-écrou (34), de sorte que l'actionnement en rotation de la vis ou de l'écrou par le moteur entraine une translation entre la première (31) et la deuxième portion (32).

2. Dispositif selon la revendication 1, dans lequel les actionneurs linéaires (30) sont adaptés pour déplacer la plate-forme mobile (20) de réception de l'équipement entre une position gerbée et au moins une position opérationnelle, et le support (10) et la plate-forme mobile (20) sont conformés pour qu'en position gerbée, la plate-forme mobile soit en appui contre le support par trois points d'appui adjacents respectivement à chaque actionneur linéaire.

3. Dispositif selon la revendication précédente, dans lequel la plate-forme mobile (20) et le support (10) sont conformés pour établir, en position gerbée, trois liaisons de type sphère-goulotte (40) entre la plate-forme mobile (20) et le support (10), les axes des liaisons sphère-goulotte (40) étant non parallèles entre eux.

4. Dispositif selon la revendication précédente, dans lequel les trois liaisons sphère-goulotte (40) sont équi-réparties sur un cercle, les axes des goulottes (42) s'étendant radialement par rapport au cercle.

5. Dispositif selon l'une des revendications 2 à 4, comprenant en outre un dispositif de maintien au lancement adapté pour maintenir, en position gerbée, la plate-forme mobile en appui contre le support lors du lancement de l'engin spatial.

6. Dispositif selon l'une des revendications 2 à 5, le dispositif (1) étant en outre dimensionné pour permettre, en position gerbée, une transmission d'efforts plus importants par les points d'appui que par les actionneurs linéaires (30).

7. Dispositif (1) selon la revendication précédente, dans lequel chaque liaison Cardan (310) comprend au moins une lame flexible (314) adaptée pour limiter les efforts pouvant être transmis de la plate-forme (20) à l'actionneur linéaire correspondant.

8. Dispositif selon l'une des revendications précédentes, dans lequel les actionneurs (30) sont disposés relativement au support (10) et à la plate-forme de réception (20) de sorte que chacun du support (10) et de la plate-forme (20) sont symétriques selon une symétrie centrale.

9. Dispositif selon l'une des revendications précédentes, dans lequel chaque liaison vis-écrou (34) est formée par une vis à rouleaux.

10. Dispositif selon la revendication précédente, dans lequel la vis à rouleaux comprend une vis (35), comprenant un fût (350) et une tige filetée (351), un écrou fileté (36) monté sur la tige filetée, et un fourreau (37) s'étendant autour de la vis (35) et de l'écrou (36), et logeant un lubrifiant, le fourreau comprenant :
- une première portion de fourreau (370) reliée à l'écrou (36) et couvrant l'extrémité libre de la tige filetée de la vis, ladite première portion de fourreau étant fermée à une extrémité située à l'extrémité libre de la tige filetée,
- une deuxième portion (371) fixe de fourreau couvrant le fût de la vis,
- une troisième portion (372) de fourreau montée coulissante sur la deuxième portion (371), et
- une quatrième portion (373) de fourreau reliée à l'écrou, et s'étendant depuis l'écrou (36) vers le fût de la vis de manière à recouvrir en partie la troisième portion (372),
dans lequel la troisième (372) et la quatrième (373) portions de fourreau sont conformées pour empêcher l'échappement de lubrifiant du fourreau.

11. Procédé de déploiement d'un dispositif (1) selon l'une des revendications précédentes monté sur un satellite, le dispositif étant initialement en position de gerbage dans laquelle la plate-forme mobile (20) est en appui contre le support (10),
le procédé comprenant la commande de chaque actionneur linéaire (30) pour écarter par translation la plate-forme mobile du support, et la commande de chaque actionneur pour orienter la plate-forme selon au moins une direction prédéterminée.

12. Produit programme d'ordinateur, comprenant des instructions de code pour la mise en œuvre du procédé selon la revendication précédente, lorsqu'il est mis en œuvre par un calculateur.

## Patentansprüche

1. Vorrichtung (1) zum Errichten und Ausrichten eines Geräts, aufweisend:
- eine mobile Geräteaufnahmeplattform (20) zum Aufnehmen des Geräts,
- einen an einer Wand eines Raumfahrzeugs befestigten Träger (10), und
- drei identische lineare Aktuatoren (30), die den Träger mit der mobilen Plattform verbinden,
wobei die Aktuatoren (30) angepasst sind, um die mobile Plattform durch Translation entlang einer Achse zu bewegen und um die mobile Plattform durch Rotation um zwei Achsen zu orientieren,
**dadurch gekennzeichnet, dass** jeder lineare Aktuator (30) aufweist:
- einen ersten Abschnitt (31), der über eine Kardan-Verbindung (310) mit der mobilen Plattform (20) verbunden ist,
- einen zweiten Abschnitt (32), der über eine Drehverbindung (320) mit dem Träger verbunden ist,
- einen Motor (33) und
- eine Schraube-Mutter-Verbindung (34), die den ersten (31) und den zweiten Abschnitt (32) miteinander verbindet,
wobei die Kardan-Verbindung (310) jedes Aktuators angepasst ist, um eine Rotation in der Achse der Schraube-Mutter-Verbindung (34) zu verhindern, so dass das Rotieren der Schraube oder der Mutter durch den Motor eine Translation zwischen dem ersten (31) und dem zweiten Abschnitt (32) zur Folge hat.

2. Vorrichtung nach Anspruch 1, in welcher die linearen Aktuatoren (30) angepasst sind, um die mobile Geräteaufnahmeplattform (20) zwischen einer gestapelten Position und mindestens einer Betriebsposition zu bewegen, und der Träger (10) und die mobile Plattform (20) konfiguriert sind, so dass in der gestapelten Position die mobile Plattform über drei Auflagepunkte, die jeweils an jeden linearen Aktuator angrenzen, auf dem Träger aufliegt.

3. Vorrichtung nach dem vorstehenden Anspruch, in welcher die mobile Plattform (20) und der Träger (10) konfiguriert sind, um in der gestapelten Position drei Verbindungen des Typs Kugel-Rinne (40) zwischen der mobilen Plattform (20) und dem Träger (10) zu bilden, wobei die Achsen der Kugel-Rinne-Verbindungen (40) zueinander nicht parallel sind.

4. Vorrichtung nach dem vorstehenden Anspruch, in welcher die drei Kugel-Rinne-Verbindungen (40) gleichmäßig auf einem Kreis verteilt sind, wobei die Achsen der Rinnen (42) sich radial bezüglich des Kreises erstrecken.

5. Vorrichtung nach einem der Ansprüche 2 bis 4, aufweisend ferner eine Startfesthaltevorrichtung, die angepasst ist, um beim Start des Raumfahrzeugs die mobile Plattform in der gestapelten Position auf dem Träger aufliegend zu halten.

6. Vorrichtung nach einem der Ansprüche 2 bis 5, wobei die Vorrichtung (1) ferner dimensioniert ist, um in der gestapelten Position eine Übertragung größerer Belastungen über die Auflagepunkte als über die linearen Aktuatoren (30) zu erlauben.

7. Vorrichtung (1) nach dem vorstehenden Anspruch, in welcher jede Kardan-Verbindung (310) mindestens eine flexible Lamelle (314) aufweist, die angepasst ist, um die Belastungen, die von der Plattform (20) auf den entsprechenden linearen Aktuator übertragen werden können, zu begrenzen.

8. Vorrichtung nach einem der vorstehenden Ansprüche, in welcher die Aktuatoren (30) relativ zu dem Träger (10) und zu der Aufnahmeplattform (20) angeordnet sind, derart, dass sowohl der Träger (10) als auch die Plattform (20) symmetrisch bezüglich einer zentralen Symmetrieachse sind.

9. Vorrichtung nach einem der vorstehenden Ansprüche, in welcher jede Schraube-Mutter-Verbindung (34) eine Rollenschraube aufweist.

10. Vorrichtung nach dem vorstehenden Anspruch, in welcher die Rollenschraube eine Schraube (35) mit einem Schaft (350) und einer Gewindestange (351), eine an der Gewindestange angebrachte Gewindemutter (36) und eine Hülse (37) aufweist, die sich um die Schraube (35) und die Mutter (36) herum erstreckt und ein Schmiermittel beherbergt, wobei die Hülse aufweist:
- einen ersten Hülsenabschnitt (370), der mit der Mutter (36) verbunden ist und das freie Ende der Gewindestange der Schraube bedeckt, wobei der erste Hülsenabschnitt an einem Ende, das sich an dem freien Ende der Gewindestange befindet, geschlossen ist,
- einen zweiten fixierten Hülsenabschnitt (371), der den Schaft der Schraube bedeckt,
- einen dritten Hülsenabschnitt (372), der über den zweiten Abschnitt (371) gleitbar angebracht ist, und
- einen vierten Hülsenabschnitt (373), der mit der Mutter verbunden ist und sich von der Mutter (36) aus hin zu dem Schaft der Schraube erstreckt, um so den dritten Abschnitt (372) teilweise zu bedecken,
wobei der dritte (372) und der vierte (373) Hülsenabschnitt konfiguriert sind, um das Entweichen von Schmiermittel aus der Hülse zu verhindern.

11. Verfahren zum Errichten einer an einem Satelliten angebrachten Vorrichtung (1) nach einem der vorstehenden Ansprüche, wobei die Vorrichtung anfangs in einer Stapelposition ist, in welcher die mobile Plattform (20) auf dem Träger (10) aufliegt,
wobei das Verfahren aufweist: Betätigen jedes linearen Aktuators (30), um die mobile Plattform durch Translation von dem Träger weg zu bewegen, und Betätigen jedes Aktuators, um die Plattform in mindestens eine vorgegebene Richtung zu orientieren.

12. Computerprogrammprodukt aufweisend Codebefehle zum Durchführen des Verfahrens nach dem vorstehenden Anspruch, wenn es von einem Rechner ausgeführt wird.

## Claims

1. Device (1) for deploying and pointing an item of equipment, comprising:
- a mobile platform (20) for receiving the equipment,
- a support (10) attached to a wall of a spacecraft, and
- three identical linear actuators (30) connecting the support to the mobile platform, the actuators (30) being adapted to move the mobile platform in translation along an axis and to orient the mobile platform in rotation about two axes,
**characterised in that** each linear actuator (30) comprises:
- a first portion (31) connected to the mobile platform (20) by a cardan joint (310),
- a second portion (32) connected to the support by a pivot connection (320),
- a motor (33), and
- a screw-nut connection (34) interconnecting the first (31) and second portion (32),
the cardan joint (310) of each actuator being adapted to prevent a rotation in the axis of the screw-nut connection (34) such that the rotational actuation of the screw or nut by the motor brings about a translation between the first (31) and second portion (32).

2. Device according to claim 1, wherein the linear actuators (30) are adapted to move the mobile platform (20) for receiving the equipment between a closed position and at least one operational position, and the support (10) and mobile platform (20) are designed so that in a closed position, the mobile platform bears against the support via three support points adjacent respectively to each linear actuator.

3. Device according to the preceding claim, wherein the mobile platform (20) and the support (10) are designed to establish, in a closed position, three sphere-chute type connections (40) between the mobile platform (20) and the support (10), the axes of the sphere-chute connections (40) being non-parallel to each other.

4. Device according to the preceding claim, wherein the sphere-chute connections (40) are equally spaced on a circle, the axes of the chutes (42) extending radially with respect of the circle.

5. Device according to one of claims 2 to 4, further comprising a launch holding device adapted to hold, in a closed position, the mobile platform against the support during the launch of the spacecraft.

6. Device according to one of claims 2 to 5, the device (1) further being sized to allow, in a closed position, greater forces to be transmitted via the support points than via the linear actuators (30).

7. Device (1) according to the preceding claim, wherein each cardan joint (310) comprises at least one flexible blade (314) adapted to limit the forces that can be transmitted from the platform (20) to the corresponding linear actuator.

8. Device according to one of the preceding claims, wherein the actuators (30) are arranged relative to the support (10) and to the receiving platform (20) such that each of the support (10) and platform (20) are symmetrical according to a central symmetry.

9. Device according to one of the preceding claims, wherein each screw-nut connection (34) is formed by a roller screw.

10. Device according to the preceding claim, wherein the roller screw comprises a screw (35), comprising a shank (350) and a threaded rod (351), a threaded nut (36) mounted on the threaded rod, and a sleeve (37) extending around the screw (35) and nut (36), and housing a lubricant, the sleeve comprising:
- a first sleeve portion (370) connected to the nut (36) and covering the free end of the threaded rod of the screw, said first sleeve portion being closed to an end situated at the free end of the threaded rod,
- a second fixed sleeve portion (371) covering the shank of the screw,
- a third sleeve portion (372) slidably mounted on the second portion (371), and
- a fourth sleeve portion (373) connected to the nut, and extending from the nut (36) towards the shank of the screw so as to partially cover the third portion (372),
wherein the third (372) and fourth (373) sleeve portions are designed to prevent the lubricant escaping from the sleeve.

11. Method for deploying a device (1) according to one of the preceding claims mounted on a satellite, the device being initially in a closed position in which the mobile platform (20) bears against the support (10),
the method comprising controlling of each linear actuator (30) to move the mobile platform away from the support by translation, and controlling each actuator to orient the platform according to at least one predetermined direction.

12. Computer program product, comprising code instructions for implementing the method according to the preceding claim, when it is implemented by a computer.
